# EUROPÄISCHE PATENTSCHRIFT

(11) **EP 3 626 583 B1**
(45) Veröffentlichungstag und Bekanntmachung des Hinweises auf die Patenterteilung: **25.05.2022**
(21) Anmeldenummer: 19193032.0
(22) Anmeldetag: 22.08.2019
(51) Int. Cl.: B62D 6/00, B62D 15/02

(54) **VERFAHREN ZUM BETREIBEN EINER STEUEREINHEIT EINES KRAFTFAHRZEUGS SOWIE KRAFTFAHRZEUG MIT EINER STEUEREINHEIT ZUM DURCHFÜHREN EINES DERARTIGEN VERFAHRENS**
METHOD FOR OPERATING A CONTROL UNIT OF A MOTOR VEHICLE AND MOTOR VEHICLE COMPRISING A CONTROL UNIT FOR CARRYING OUT SAID METHOD
PROCÉDÉ DE FONCTIONNEMENT D'UNE UNITÉ DE COMMANDE D'UN VÉHICULE AUTOMOBILE ET VÉHICULE AUTOMOBILE DOTÉ D'UNE UNITÉ DE COMMANDE PERMETTANT LA MISE EN OEUVRE DUDIT PROCÉDÉ

(30) Priorität: 21.09.2018 DE 102018216103
(43) Veröffentlichungstag der Anmeldung: 25.03.2020
(73) Patentinhaber: Volkswagen AG, 38440 Wolfsburg (DE)
(72) Erfinder: Seeland, Jana, 38448 Wolfsburg (DE); Hopp, Christian, 38302 Wolfenbüttel (DE)

(56) Entgegenhaltungen:
- WO-A1-2018/163456
- DE-A1- 10 323 975
- DE-A1-102004 038 008
- DE-A1-102006 023 562
- DE-A1-102008 003 666
- DE-A1-102017 124 375
- DE-A1-102017 128 739

## Beschreibung

Die Erfindung betrifft ein Verfahren zum Betreiben einer Steuereinheit eines Kraftfahrzeugs sowie ein Kraftfahrzeug mit der Steuereinheit, die dazu ausgelegt ist, ein derartiges Verfahren durchzuführen.

Kraftfahrzeuge weisen häufig eine Steuereinheit zum elektrischen Ansteuern einer elektromechanischen Kopplungseinheit einer Lenkung des Kraftfahrzeugs auf. Sie weisen also eine sogenannte Steer-by-wire-Technologie auf. Ist in einem derartigen Kraftfahrzeug ein Fahrerassistenzsystem zum autonomen Lenken des Kraftfahrzeugs aktiviert, wird in der Regel ein Radeinschlagwinkel von Rädern des Kraftfahrzeugs gemäß einer in der Kopplungseinheit hinterlegten Lenkradkennlinie auf das Lenkrad des Kraftfahrzeugs übertragen, sodass das Lenkrad einen vorgegebenen Lenkraddrehwinkel einnimmt, der zum Radeinschlagwinkel korrespondiert. Diese automatische Drehbewegung des Lenkrads kann jedoch für einen Benutzer des Kraftfahrzeugs überraschend und/oder unangenehm sein.

In der US 2016/0347348 A1 wird ein Lenkradsystem beschrieben, bei dem sich ein Lenkrad zwischen zwei Lenkradpositionen im Kraftfahrzeug bewegen kann, wobei eine stationäre und eine eingezogene Lenkradposition voneinander unterschieden werden. Dieses Lenkradsystem ist dazu ausgelegt, basierend auf der Steer-by-wire-Technologie eine elektrische Kopplung zwischen dem Lenkrad und einer Lenkachse bereitzustellen.

In der DE 10 2007 035 751 A1 werden eine Vorrichtung und ein Verfahren zum Eingreifen in ein Lenksystem mit einer Aktivlenkeinrichtung beschrieben. Im Rahmen des Verfahrens kann eine Notsituation erkannt werden, beispielsweise daran, dass ein Airbag im Fahrzeug ausgelöst wird, woraufhin eine Steuereinrichtung mittels der Aktivlenkeinrichtung einen Lenkeingriff vornehmen kann, um die Folgen eines möglichen Aufpralls des Kraftfahrzeugs aufgrund der Notsituation zu reduzieren. Zudem wird mit dem Verfahren ein Einparksystem vorgeschlagen, bei dem mit der Aktivlenkeinrichtung der zum Einparken erforderliche Lenkwinkel eingestellt wird. Hierbei kann unabhängig von einem Fahrer des Fahrzeugs ein aktiver Lenkeingriff durch die Aktivlenkeinrichtung ermöglicht sein.

In der DE 10 2015 004 745 A1 wird ein Verfahren zum Betreiben eines Kraftfahrzeugs beschrieben. Ein Lenkwinkel eines Rades des Kraftfahrzeugs wird hierbei nicht direkt an ein Lenkrad übertragen sondern kann von dem Rad entkoppelt sein. Es ist beispielsweise vorgesehen, dass der Lenkwinkel bei einer Autobahnfahrt deutlich gegenüber einer Stadtfahrt reduziert ist. Der Zusammenhang zwischen der Drehbewegung des Lenkrads und dem tatsächlich eingestellten Lenkwinkel kann zudem abhängig von der Ist-Geschwindigkeit des Kraftfahrzeugs festgelegt sein.

In der EP 2 460 712 B1 wird ein Verfahren zum Betreiben eines Kraftwagens beschrieben. Im Rahmen des Verfahrens wird hierbei zunächst ein Objekt im Umfeld des Kraftwagens erfasst und bewertet, ob eine Kollisionsgefahr des Kraftwagens mit diesem Objekt besteht. Abhängig von dieser Bewertung erfolgt ein Verstellen eines Lenkwinkels des Kraftwagens, wobei ein Grad einer Entkopplung des Lenkwinkels vom einem Radeinschlagwinkel abhängig von einer Geschwindigkeit des Verstellens des Lenkwinkels ist und mit zunehmender Geschwindigkeit des Verstellens zunimmt. Hierdurch wird eine stark verringerte Drehbewegung des Lenkrades auch bei dynamischen und automatischen Notausweichvorgängen möglich.

Die US 2019/0210586 A1 zeigt eine gattungsgemäße Steuereinrichtung, mittels welcher zwischen einem manuellen Lenkmodus und einem automatischen Lenkmodus gewechselt werden kann.

Die DE 10 2017 124 375 A1 zeigt ein Fahrerassistenzsystem für ein Fahrzeug zur Steuerung eines am Fahrzeug angeordneten Anhängers mit einer Lenkeingabevorrichtung. Die Steuerung dieses Fahrerassistenzsystems erfolgt beispielsweise mithilfe eines besonderen Drehknopfes, der in der Nähe eines Schalthebels des Fahrzeugs angeordnet ist

Die beschriebenen Systeme und Verfahren schlagen eine Veränderung der Lenkradkennlinie eines Kraftfahrzeugs in einer Gefahrensituation, das heißt bei einem Eingriff von sogenannten Notfallfunktionen, sowie abhängig von einer aktuellen Fahrzeugumgebung, wie beispielsweise der Straßenart oder der Ist-Geschwindigkeit des Kraftfahrzeugs, vor. Diese Änderungen der Lenkradkennlinie sind jedoch für einen Benutzer des Kraftfahrzeugs nicht nachvollziehbar, da dieser keinen Einfluss auf die Änderungen der Lenkradkennlinie hat oder sogar von diesen Änderungen überrumpelt und überrascht wird.

Es ist die Aufgabe der Erfindung eine Lösung bereitzustellen, mit der eine Lenkungskennlinie eines Kraftfahrzeugs für einen Benutzer des Kraftfahrzeugs nachvollziehbar geplant werden kann.

Diese Aufgabe wird durch ein Verfahren zum Betreiben eines Kraftfahrzeugs gemäß Patentanspruch 1 sowie durch ein Kraftfahrzeug gemäß Patentanspruch 9 gelöst.

Vorteilhafter Ausgestaltung mit zweckmäßigem und nicht trivialen Weiterbildungen der Erfindung sind in den abhängigen Ansprüchen, der folgenden Beschreibung und den Figuren angegeben.

Das erfindungsgemäße Verfahren zum Betreiben einer Steuereinheit eines Kraftfahrzeugs ist für ein Kraftfahrzeug vorgesehen, das eine Steuereinheit zum elektrischen Ansteuern einer elektromechanischen Kopplungseinheit einer Lenkung des Kraftfahrzeugs aufweist, wobei die Steuereinheit die Kopplungseinheit gemäß einer Lenkradkennlinie ansteuert, die einen Radeinschlagwinkel von Rädern des Kraftfahrzeugs mit einem von einem Lenkrad des Kraftfahrzeugs eingenommenen Lenkraddrehwinkel gegenseitig ins Verhältnis setzt. Das Verfahren ist somit zum Betreiben eines Kraftfahrzeugs ausgelegt, das über eine Steer-by-wire-Technologie verfügt. Der Lenkraddrehwinkel definiert also eine Radstellung, das heißt den Radeinschlagwinkel der Räder des Kraftfahrzeugs, in Bezug auf eine Längsachse des Kraftfahrzeugs und umgekehrt. Als eine Standardeinstellung der Lenkradkennlinie ist in der Steuereinheit des Kraftfahrzeugs eine Normallenkradkennlinie bereitgestellt. Im Rahmen des erfindungsgemäßen Verfahrens wird somit angenommen, dass zur Lenkung des Kraftfahrzeugs dieses zunächst mit der Steuereinheit gemäß der Normallenkradkennlinie angesteuert wird. Dieser Ausgangszustand zeichnet sich beispielsweise dadurch aus, dass in dem Kraftfahrzeug kein Fahrerassistenzsystem aktiviert ist, das aktuell auf die Lenkung des Kraftfahrzeugs zugreift, und ein Benutzer des Kraftfahrzeug dieses manuell über eine Bewegung des Lenkrads lenkt. Der Radeinschlagwinkel der Räder des Kraftfahrzeugs wird dabei gemäß der Normallenkradkennlinie entsprechend des vom Lenkrad eingenommenen Lenkraddrehwinkels mittels des entsprechenden Ansteuerns der Kopplungseinheit eingestellt.

Das erfindungsgemäße Verfahren zum Betreiben der Steuereinheit umfasst folgende Schritte: Zunächst wird eine potentiell anstehende Situation des Kraftfahrzeugs anhand von Daten, die einen Zustand eines Fahrerassistenzsystems des Kraftfahrzeugs charakterisieren und von der Steuereinheit empfangen werden, erkannt. Bei der potentiell anstehenden Situation kann es sich beispielsweise um einen Einparkvorgang des Kraftfahrzeugs handeln. Diese Situation "Einparken" kann beispielsweise anhand von Daten eines Einparkhilfeassistenten des Kraftfahrzeugs erkannt werden. Dieses Erkennen erfolgt beispielsweise daran, dass der Benutzer des Kraftfahrzeugs manuell den Einparkhilfeassistenten mittels einer dafür vorgesehenen Betätigungseinrichtung einer Anzeigeeinrichtung oder eines Tasters im Kraftfahrzeuginneren aktiviert hat. Der Einparkhilfeassistent wird von einer Steuereinrichtung, bei der es sich um eine elektronische Einrichtung des Kraftfahrzeugs handelt, gesteuert, sodass der Zustand des aktivierten Einparkhilfeassistenten anhand der Daten, die den Zustand dieser elektronischen Einrichtung charakterisieren und der Steuereinheit bereitgestellt sind, der Steuereinheit bekannt ist.

In einem nächsten Verfahrensschritt wird überprüft, ob der erkannten Situation eine in der Steuereinheit bereitgestellte Sonderlenkradkennlinie, die von der Normallenkradkennlinie abweicht, zugeordnet ist. In diesem zweiten Schritt wird somit festgestellt, ob in der Steuereinheit zum Beispiel für die Situation "Einparken" eine für genau diese potentiell anstehende Situation vorgesehene Lenkradkennlinie, die sogenannte Sonderlenkradkennlinie für die Situation "Einparken", abgespeichert ist. Mehrere derartiger Sonderlenkradkennlinien, die jeweils für verschiedene potentiell anstehende Situationen vorgesehen sind, können in der Steuereinheit des Kraftfahrzeugs bereitgestellt sein.

Falls nun der erkannten Situation die bereitgestellte Sonderlenkradkennlinie zuordenbar ist, wird diese Sonderlenkradkennlinie aktiviert. Die Sonderlenkradkennlinie kann in diesem Beispiel, das heißt bei der potentiell anstehenden Situation "Einparken", derart ausgelegt sein, dass eine Lenkraddrehbewegung, das heißt der von dem Lenkrad des Kraftfahrzeugs eingenommene Lenkraddrehwinkel, im Vergleich zur Normallenkradkennlinie bei gleichem Radeinschlagwinkel der Räder des Kraftfahrzeugs reduziert ist, zum Beispiel auf nur 80 Prozent des Lenkraddrehwinkels gemäß der Normallenkradkennlinie. Das Aktivieren der Sonderlenkradkennlinie erfolgt hierbei automatisch. Alternativ kann jedoch auch vorgesehen sein, dass der Benutzer des Kraftfahrzeugs manuell die Sonderlenkradlinie aktiviert, wozu er beispielsweise mithilfe einer Anzeige auf der Anzeigeeinrichtung im Fahrzeuginneren aufgerufen wird.

Das erfindungsgemäße Verfahren ermöglicht es, dass frühzeitig eine Anpassung der Lenkradkennlinie erfolgt, und zwar bereits dann, wenn die potentiell anstehende Situation des Kraftfahrzeugs erkannt wurde, sich das Kraftfahrzeug jedoch noch nicht zwangsläufig tatsächlich in dieser Situation befindet. Denn erfindungsgemäß kann die potentiell anstehende Situation, in der eine alternative Lenkradkennlinie sinnvoll sein könnte, anhand eines Zustands eines Fahrerassistenzsystems des Kraftfahrzeugs erkannt werden. Da ein derartiges Fahrerassistenzsystem häufig zunächst durch den Benutzer des Kraftfahrzeugs aktiviert werden muss, wird die erfolgende Aktivierung der Sonderlenkradkennlinie für den Benutzer nachvollziehbar gestaltet. Das beschriebene Erkennen der potentiell anstehenden Situation geht zudem darüber hinaus, lediglich anhand einer Ortung des Kraftfahrzeugs, wie es beispielsweise in der DE 10 2015 004 745 A1 vorgesehen ist, bei der eine Straßenart bei der Wahl der Lenkradkennlinie berücksichtigt wird, die Sonderlenkradkennlinie auszuwählen. In jener Druckschrift wird zudem anhand der Ist-Geschwindigkeit des Kraftfahrzeugs die gewählte Lenkradkennlinie festgelegt. Mit dem erfindungsgemäßen Verfahren wird jedoch anhand der Daten, die den Zustand von Fahrerassistenzsystemen des Kraftfahrzeugs charakterisieren, die potentiell anstehende Situation erkannt. Die beschriebenen Daten charakterisieren den Zustand eines Fahrerassistenzsystems und enthalten somit Informationen darüber, ob dieses Fahrerassistenzsystem aktiviert, ob es aktiviert und aktuell hinsichtlich der Lenkung des Kraftfahrzeugs aktiv oder ob es deaktiviert ist.

Erfindungsgemäß ist es vorgesehen, dass die empfangenen Daten beinhalten, ob das Fahrerassistenzsystem des Kraftfahrzeugs aktiviert ist, wobei die potentiell anstehende Situation des Kraftfahrzeugs anhand eines Typs des aktivierten Fahrerassistenzsystems erkannt wird. Wird beispielsweise der Einparkhilfeassistent manuell vom Benutzer aktiviert, ist für dieses Fahrerassistenzsystem in der Steuereinheit ein Typ des Fahrerassistenzsystems, das heißt hierbei der Typ "Fahrerassistenzsysteme zum Einparken des Kraftfahrzeugs", hinterlegt. Der aktivierte Einparkhilfeassistent kann somit direkt mit der potentiell anstehenden Situation "Einparken" verknüpft werden, sodass anhand des aktivierten Einparkhilfeassistenten genau diese potentiell anstehende Situation erkannt wird. Das entsprechende Fahrerassistenzsystem wird hierbei bevorzugt vom Benutzer des Kraftfahrzeugs manuell aktiviert. Es ist jedoch alternativ oder zusätzlich dazu möglich, dass das entsprechende Fahrerassistenzsystem automatisch, beispielsweise aufgrund entsprechender Signale einer Sensoreinrichtung des Kraftfahrzeugs aktiviert wird. Je nach hinterlegter Sonderlenkradkennlinie kann hierbei die Kopplung von Lenkraddrehwinkel und Radeinschlagwinkel reduziert, erhöht oder sogar vollständig unterdrückt werden. Der Benutzer des Kraftfahrzeugs kann beispielsweise während eines automatischen Einparkvorgangs mithilfe des Einparkhilfeassistenten ohne sich durch die Lenkradbewegung gestört zu fühlen seine Hände auf dem Lenkrad ruhen lassen, da je nach gewählter Sonderlenkradkennlinie beispielsweise nur eine reduzierte Lenkradbewegung, das heißt nur eine reduziertes Mitdrehen des Lenkrads während des Einparkvorgangs mit dem Einparkhilfeassistenten erfolgt.

Zu der Erfindung gehören auch Ausführungsformen, durch die sich zusätzliche Vorteile ergeben.

In einer vorteilhaften Ausgestaltungsform der Erfindung ist es vorgesehen, dass falls die empfangenen Daten beinhalten, dass das Fahrerassistenzsystem aktiviert ist, jedoch bis zu einem Eingreifen des aktivierten Fahrerassistenzsystems die Kopplungseinheit der Lenkung ein vorgegebener Zeitversatz besteht, dies beim Überprüfen, ob der anhand des Typs des aktivierten Fahrerassistenzsystems erkannten Situation eine in der Steuereinheit bereitgestellte Sonderlenkradkennlinie zugeordnet ist, berücksichtigt wird. Die Aktivierung der zugeordneten Sonderlenkradkennlinie erfolgt daraufhin erst, wenn das aktivierte Fahrerassistenzsystem auf die Kopplungseinheit eingreift. Wird beispielsweise von dem Benutzer des Kraftfahrzeugs ein Einparkhilfeassistent aktiviert, der zudem die Funktion umfasst, dass er einen geeigneten Parkplatz für das Kraftfahrzeug sucht, während beispielsweise der Benutzer das Kraftfahrzeug manuell auf einer Straße das Kraftfahrzeug lenkt, wird der Einparkhilfeassistent erst dann aktiv auf die Lenkung des Kraftfahrzeugs einwirken, das heißt auf die Kopplungseinheit eingreifen, wenn die Parkplatzsuche erfolgreich abgeschlossen ist und das tatsächliche Einparken des Kraftfahrzeugs auf dem gefundenen Parkplatz erfolgt. Bei einem derartigen aktivierten Fahrerassistenzsystem besteht somit ein gewisser zeitlicher Versatz zwischen dem Aktivieren des Fahrerassistenzsystems durch den Benutzer und dem tatsächlichen Eingreifen dieses Fahrerassistenzsystems auf die Kopplungseinheit der Lenkung. Im Überprüfungsschritt des Verfahrens wird daher bei diesem Beispiel erkannt, dass der anhand des aktivierten Einparkhilfeassistenten erkannten Situation "Einparken" eine in der Steuereinheit bereitgestellte Sonderlenkradkennlinie zuordenbar ist. Allerdings wäre ein sofortiges Aktivieren dieser Sonderlenkradkennlinie, das heißt während das Kraftfahrzeug noch mithilfe des Fahrerassistenzsystems einen Parkplatz sucht und dabei vom Benutzer gemäß der Normallenkradkennlinie gelenkt wird, nicht sinnvoll. Daher wird die Sonderlenkradlinie, die der erkannten Situation "Einparken" zugeordnet ist, erst dann aktiviert, wenn das Fahrerassistenzsystem, das heißt der Einparkhilfeassistent, tatsächlich auf die Kopplungseinheit eingreift, das heißt die Lenkung des Kraftfahrzeugs während des Einparkens des Kraftfahrzeugs auf dem gefundenen Parkplatz steuert.

Analog dazu wird bei einer aktivierten Notfallfunktion, wie beispielsweise einem Emergency Assist oder einem Spurhalteassistenten erst dann die gegebenenfalls für das jeweilige Fahrerassistenzsystem in der Steuereinheit bereitgestellte Sonderlenkradkennlinien aktiviert, wenn das jeweilige Fahrerassistenzsystem aktiv auf die Kopplungseinheit eingreifen. Die Sonderlenkradlinie ist also nicht während der ganzen Fahrt des Kraftfahrzeugs aktiviert, nur weil eine Notfallfunktion, wie beispielsweise der Emergency Assist des Kraftfahrzeugs, während der gesamten Fahrt aktiviert ist. Mit dem Verfahren ist somit unabhängig von dem aktivierten Fahrerassistenzsystem stets ein für den Benutzer des Kraftfahrzeugs nachvollziehbares Wechseln der Lenkradkennlinie von der Normallenkradkennlinie zur Sonderlenkradkennlinie realisierbar.

Eine weitere vorteilhafte Ausgestaltungsform der Erfindung sieht vor, dass als potentiell anstehende Situation des Kraftfahrzeugs eine Gesamtsituation des Kraftfahrzeugs erkannt wird, die eine der folgenden Situationen umfasst: ein Einparken des Kraftfahrzeugs, ein Anhängen eines Anhängers an das Kraftfahrzeug, ein Rangieren des Kraftfahrzeugs mit angehängtem Anhänger, ein Fahren des Kraftfahrzeugs auf einer vorgegebenen Fahrspur, ein Abbiegen des Kraftfahrzeugs. Die potentiell anstehende Situation ist daher im Sinne der Erfindung als Situation definiert, die ein Manövrieren des Kraftfahrzeugs umfasst und somit das gesamte Kraftfahrzeug betrifft. Zusätzlich zu dem bereits genannten Einparken des Kraftfahrzeugs, das beispielsweise anhand des aktivierten Einparkhilfeassistenten erkannt werden kann, werden hier weitere potentiell anstehende Situationen genannt, die beispielsweise ein Anhängen eines Anhängers oder ein Rangieren eines Kraftfahrzeugs mit einem Anhänger umfassen, wie es beispielsweise mittels eines Anhängerankoppelassistenten oder eines Anhängerrangierassistenten möglich ist. Alternativ oder zusätzlich dazu, eignet sich als potentiell anstehende Situation, eine Situationen, bei der während der Fahrt des Kraftfahrzeugs auf die Lenkung des Kraftfahrzeugs zugegriffen wird, wie es beispielsweise mittels eines Spurhalteassistenten oder eines Abbiegeassistenten der Fall ist. Bei den genannten Situationen, die als potentiell anstehende Situationen erkannt werden, handelt es sich also jeweils um Situationen, bei denen das Kraftfahrzeug zumindest teilautonom gelenkt wird, jedoch ein Mitdrehen des Lenkrads korrespondierend zum angesteuerten Radeinschlagwinkel der Räder erfolgt. Bei all diesen Situationen ist es jedoch für einen Benutzer des Kraftfahrzeugs besonders angenehm, wenn die Lenkradbewegung zumindest auf ein für ihn komfortables sowie ungefährliches Maß reduziert oder sogar komplett unterdrückt wird.

In einer weiteren Ausgestaltungsform der Erfindung ist es vorgesehen, dass die empfangenen Daten mittels einer Sensoreinrichtung des Kraftfahrzeugs erfasst werden und anhand der derart bereitgestellten Daten die potentiell anstehende Situation des Kraftfahrzeugs erkannt wird. Zusätzlich zu den Daten, die einen Zustand der elektronischen Einrichtung des Kraftfahrzeugs charakterisieren, kann also auch auf Daten einer Sensoreinrichtung des Kraftfahrzeugs zurückgegriffen werden. Bei dieser Sensoreinrichtung kann es sich beispielsweise um ein Kamerasystem des Kraftfahrzeugs, bestehend aus einer oder mehreren Frontkameras, Seitenkameras und einer oder mehreren Heckkameras, handeln. Mithilfe dieses Kamerasystems kann beispielsweise eine Umgebung des Kraftfahrzeugs erfasst werden, sodass zum Beispiel unabhängig von einem aktivierten Einparkhilfeassistenten die Situation "Einparken" erkannt werden kann, wenn das Kamerasystem beispielsweise eine Parklücke am Straßenrand erfasst hat. Zusätzlich zu diesen Kameradaten wird hierbei zum Beispiel auf Daten zugegriffen, die den Zustand einer Blinkereinrichtung des Kraftfahrzeugs (Fahrtrichtungsanzeiger) charakterisieren, die eine der elektronischen Einrichtungen des Kraftfahrzeugs ist und beispielsweise manuell vom Benutzer aktiviert wird, um einen anstehenden Einparkvorgang anzuzeigen. Zusätzlich oder alternativ dazu kann der Zustand eines Rückwärtsganges berücksichtigt werden, das heißt Daten, die angeben, ob der Rückwärtsgang des Kraftfahrzeugs eingelegt ist oder nicht. Unter Berücksichtigung all dieser Daten, der Sensoreinrichtung sowie der Zustandsdaten der Blinkereinrichtung und/oder des Rückwärtsgangs, wird die Situation "Einparken" mit hoher Wahrscheinlichkeit nur dann erkannt, wenn diese Situation tatsächlich potentiell ansteht. Hierdurch wird vermieden, dass zum Beispiel immer nach dem Vorbeifahren an einer beliebigen Parklücke die Sonderlenkradkennlinie für die Situation "Einparken" aktiviert wird, ohne dass der Benutzer das Kraftfahrzeug plant und wünscht einzuparken. Hierdurch wird das Erkennen der potentiell anstehenden Situation des Kraftfahrzeugs dann möglich, wenn kein Fahrerassistenzsystem des Kraftfahrzeugs aktiv von dem Benutzer des Kraftfahrzeugs aktiviert wird. Denn in einer derartigen Situation kann es dennoch sinnvoll und zum Beispiel vom Benutzer gewünscht sein kann, dass eine Sonderlenkradkennlinie aktiviert wird, sodass beispielsweise eine kleine Lenkraddrehbewegung ausreicht um einen größeren Radeinschlagwinkel der Räder als gemäß der Normallenkradkennlinie zu erreichen, wodurch das Einparken für den Benutzer des Kraftfahrzeugs erleichtert werden kann.

In einer weiteren vorteilhaften Ausgestaltungsform der Erfindung ist es vorgesehen, dass die empfangenen Daten eine Fahrtrichtung des Kraftfahrzeugs beinhalten. Wünscht der Benutzer beispielsweise, dass sein Kraftfahrzeug mithilfe des Einparkhilfeassistenten auf einem Parkplatz eingeparkt wird, wobei die potentiell anstehende Situation "Einparken" hierbei anhand des aktivierten Einparkhilfeassistenten erkannt wird, können mehrere Sonderlenkradkennlinie für die Situation "Einparken" in der Steuereinheit bereitgestellt sein. Zum Beispiel kann eine der bereitgestellten Sonderlenkradkennlinie für eine Vorwärtsfahrt des Kraftfahrzeugs vorgesehen sein und eine zweite Sonderlenkradkennlinie für eine Rückwärtsfahrt. Daher kann zusätzlich zu den Daten, die den Zustand der elektronischen Einrichtungen des Kraftfahrzeugs charakterisieren, die Fahrtrichtung des Kraftfahrzeugs beim Erkennen der potentiell anstehenden Situation berücksichtigt werden. Hierdurch wird eine besonders differenzierte und sogar von der spezifischen Situation während der potentiell anstehenden Situation abhängige Lenkradkennlinienauswahl möglich. Beispielsweise kann die Lenkraddrehbewegung beim Rückwärtsfahren stärker reduziert werden als es die Sonderlenkradkennlinie für das Vorwärtsfahren beim Einparken vorsieht.

Alternativ und/oder zusätzlich dazu kann anhand entsprechender empfangener Daten die Lenkraddrehgeschwindigkeit und/oder die Ist-Geschwindigkeit des Kraftfahrzeugs beim Erkennen der potentiell anstehenden Situation berücksichtigt werden.

Eine weitere besonders vorteilhafte Ausgestaltung der Erfindung sieht vor, dass gemäß der Sonderlenkradkennlinie der Radeinschlagwinkel der Räder des Kraftfahrzeugs von dem vom Lenkrad eingenommenen Lenkraddrehwinkel entkoppelt ist, sodass beim Ansteuern der Kopplungseinheit der Lenkung durch die Steuereinheit das Lenkrad des Kraftfahrzeugs unbewegt bleibt. Es ist somit eine vollständige Entkopplung der Lenkraddrehbewegung von dem Radeinschlag der Räder des Kraftfahrzeugs möglich. Das Lenkrad würde sich somit beispielsweise bei einem autonomen Einparkvorgang mithilfe des Einparkhilfeassistenten überhaupt nicht bewegen, während entsprechende zum Einparken führende Radeinschlagwinkel der Räder des Kraftfahrzeugs von der Steuereinheit mittels einer entsprechenden Ansteuerung der Kopplungseinheit eingestellt werden. Durch eine derartige Wahl der Sonderlenkradlinie wird die Lenkung des Kraftfahrzeugs in der erkannten Situation besonders komfortabel, da der Benutzer beispielsweise beide Hände auf dem Lenkrad ablegen kann, ohne durch eine Lenkraddrehbewegung irritiert, gestört oder gegebenenfalls sogar verletzt zu werden.

In einer weiteren besonders vorteilhaften Ausgestaltungsform der Erfindung ist es vorgesehen, dass die Sonderlenkradkennlinie von einem Benutzer des Kraftfahrzeugs mittels eines vorgegebenen Einstellungsmenüs auswählbar und/oder einstellbar ausgestaltet ist. Der Benutzer des Kraftfahrzeugs kann also beispielsweise mithilfe von entsprechenden Betätigungselementen einer Anzeigevorrichtung im Kraftfahrzeuginneren ein Einstellungsmenü auswählen, in dem er verschiedene Lenkradkennlinien für beispielsweise vorgegebene potentiell anstehende Situationen auswählen kann. Alternativ oder zusätzlich dazu kann er diese Sonderlenkradkennlinien sowie die potentiell anstehenden Situationen einstellen, das heißt sich entsprechende Sonderlenkradkennlinien zusammenstellen und in der Speichereinheit des Kraftfahrzeugs hinterlegen. Der Nutzer des Kraftfahrzeugs kann somit beispielsweise bestimmen, dass er bei einem pilotierten Einparkvorgang mithilfe des Einparkhilfeassistenten keinerlei Bewegung des Lenkrads wünscht, das heißt er kann eine Sonderlenkradkennlinie für die Situation "Einparken" hinterlegen, gemäß der der Radeinstellwinkel der Räder des Kraftfahrzeugs von dem vom Lenkrad eingenommenen Lenkraddrehwinkel entkoppelt ist. Zudem kann der Benutzer in der Steuereinheit hinterlegen, dass er bei einem aktivierten Parklenkassistenten durchaus eine Lenkraddrehbewegung mitverfolgen möchte, diese soll jedoch im Vergleich zur Normallenkradkennlinie unterdrückt sein, das heißt kleinere Lenkraddrehwinkel bei gleichen Radeinschlagwinkeln eingenommen werden. Der Benutzer des Kraftfahrzeugs kann also individuelle Konfigurationen anlegen, sie zum Beispiel verknüpft mit einem erkannten Schlüssel oder einem erkannten Mobiltelefon des Benutzers in der Steuereinheit hinterlegt sind. Der Benutzer des Kraftfahrzeugs weiß daher bereits im Voraus bei welcher potentiell anstehenden Situation er mit welcher Änderung der Lenkradkennlinie zu rechnen hat, sodass für ihn die Veränderung der Normallenkradkennlinie zu einer der hinterlegten Sonderlenkradkennlinien nachvollziehbar ist. Hierdurch wird erreicht, dass sich der Benutzen des Kraftfahrzeugs durch das Verfahren beim Fahren unterstützt fühlen kann.

Die Sonderlenkradkennlinie kann als progressive Lenkradkennlinie ausgebildet sein, das heißt als Lenkradkennlinie die nicht konstant verläuft sondern zum Beispiel bei großen Radeinschlagwinkeln stärker ansteigt als bei kleineren Radeinschlagwinkeln. Hierdurch kann beispielsweise ein scharfer Anstieg von Lenkraddrehwinkel zu Radeinschlagwinkel in einem vorgegebenen Radeinschlagwinkelbereich eingestellt werden. Der gewünschte Verlauf der Sonderlenkradkennlinie kann von dem Benutzer des Kraftfahrzeugs mittels des vorgegebenen Einstellungsmenüs ausgewählt und/oder eingestellt werden. Hierbei kann der Benutzer des Kraftfahrzeugs zum Beispiel den gewünschten Verlauf der Sonderlenkradkennlinie aus einer Auswahl an vorgegebenen Sonderlenkradkennlinien auswählen, das heißt ihm werden verschiedene Konfigurationen für Sonderlenkradkennlinien vorgeschlagen, aus denen er sich die gewünschte Konfiguration aussuchen kann.

Eine weitere Ausgestaltungsform der Erfindung sieht vor, dass sobald erkannt wird, dass die erkannte Situation beendet ist, die Normallenkradkennlinie aktiviert wird. Die Sonderlenkradkennlinie ist also nur so lange aktiv, wie die erkannte Situation anhält. Zum Beispiel bei der Situation "Einparken", die beispielsweise anhand des aktivierten Einparkhilfeassistenten erkannt wird, ist diese Situation in der Regel dann beendet, wenn der Einparkvorgang beendet und/oder der Einparkhilfeassistent deaktiviert ist. Sobald das jeweilige Signal dieses Beendens und/oder Deaktivierens des Einparkhilfeassistenten der Steuereinheit bereitgestellt ist, wechselt die Lenkradkennlinie zurück zur Normallenkradkennlinie. Alternativ oder zusätzlich dazu, kann kontinuierlich abgefragt werden, ob die erkannte Situation weiterhin erkennbar ist, das heißt ob diese weiterhin der aktuellen Situation des Kraftfahrzeugs entspricht. Hierfür wird zum Beispiel in vorgegebenen Zeitabständen der aktuelle Zustand des Einparkhilfeassistenten von der Steuereinheit abgefragt. Alternativ oder zusätzlich dazu können kontinuierlich oder gegebenenfalls nur bei einer Änderung des Zustands der elektronischen Einrichtung des Kraftfahrzeugs von dieser elektronischen Einrichtung der Steuereinheit die Daten bereitgestellt werden, die den Zustand er elektronischen Einrichtungen aktuell charakterisieren und somit zum Erkennen, ob die Situation beendet ist, herangezogen werden können. Hiermit kann sichergestellt werden, dass die jeweilige Sonderlenkradkennlinie nur dann aktiviert ist, wenn sich das Kraftfahrzeug tatsächlich in der Situation befindet, für die diese Sonderlenkradkennlinie vorgesehen ist.

Die Erfindung stellt auch eine Steuereinheit für ein Kraftfahrzeug bereit. Die Steuereinheit weist eine Prozessoreinrichtung auf, welche dazu eingerichtet ist, eine Ausführungsform des erfindungsgemäßen Verfahrens durchzuführen.

Zu der Erfindung gehört auch die Steuereinheit für das Kraftfahrzeug. Die Steuereinheit weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Erfindungsgemäß ist zudem ein Kraftfahrzeug mit einer Steuereinheit vorgesehen, wobei die Steuereinheit zum elektrischen Ansteuern einer elektromechanischen Kopplungseinheit einer Lenkung des Kraftfahrzeugs ausgelegt ist und eine Prozessoreinrichtung aufweist, die dazu eingerichtet ist, das oben beschriebenen Verfahren durchzuführen. In Zusammenhang mit dem erfindungsgemäßen Verfahren vorgestellten bevorzugten Ausgestaltung und deren Vorteile gelten entsprechend, soweit anwendbar, für das erfindungsgemäße Kraftfahrzeug.

Im Folgenden ist ein Ausführungsbeispiel der Erfindung beschrieben. Hierzu zeigt:
- Fig. 1: eine schematische Draufsicht auf ein Kraftfahrzeug mit einer Steuereinheit zum elektrischen Ansteuern einer elektromechanischen Kopplungseinheit einer Lenkung des Kraftfahrzeugs; und
- Fig. 2: in schematischer Darstellung einen Signalflussgraphen für ein Verfahren zum Betreiben eines Kraftfahrzeugs.

In den Figuren sind funktionsgleiche Elemente jeweils mit denselben Bezugszeichen versehen.

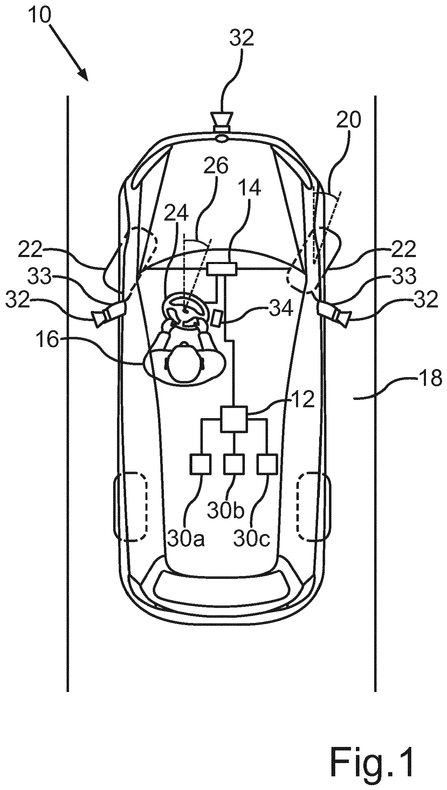

In Fig. 1 ist ein Kraftfahrzeug 10 skizziert, das eine Steuereinheit 12 zum elektrischen Ansteuern einer elektromechanischen Kopplungseinheit 14 einer Lenkung des Kraftfahrzeugs 10 aufweist. In dem Kraftfahrzeug 10 befindet sich ein Benutzer 16 des Kraftfahrzeugs 10, der mit dem Kraftfahrzeug 10 auf einer Straße 18 fährt. Die Steuereinheit 12 steuert die Kopplungseinheit 14 gemäß einer Lenkradkennlinie an, die einen Radeinschlagwinkel 20 von Rädern 22 des Kraftfahrzeugs 10 mit einem von einem Lenkrad 24 des Kraftfahrzeugs 10 angenommenen Lenkraddrehwinkel 26 gegenseitig ins Verhältnis setzt. Als Lenkradkennlinie ist in der Steuereinheit 12 eine sogenannte Normallenkradkennlinie bereitgestellt. Diese Normallenkradkennlinie ist zunächst aktiviert.

Das Kraftfahrzeug 10 weist zudem mehrere elektronische Einrichtungen 30 auf, und zwar einen Einparkhilfeassistenten 30a, eine Blinkereinrichtung 30b sowie eine Auswerteeinheit 30c eines Kamerasystems des Kraftfahrzeugs 10. Dieses Kamerasystem umfasst mehrere Kameras 32, die als Sensoreinrichtungen 32 in Fig. 1 skizziert sind. Hierbei handelt es sich um die Kamera 32 im Frontbereich des Kraftfahrzeugs 10 sowie um Kameras 32, die in Seitenspiegel 33 des Kraftfahrzeugs 10 integriert sind. Die Sensoreinrichtungen 32 sind also derart ausgerichtet, dass zumindest eine Fahrzeugumgebung des Kraftfahrzeugs 10 vor und hinter dem Kraftfahrzeug 10 sowie zu dessen jeweiligen Seiten im Bereich von Rädern 22 einer Vorderachse des Kraftfahrzeugs 10 erfassbar ist.

Die elektronischen Einrichtungen 30a, 30b stellen jeweils Daten, die einen Zustand der elektronischen Einrichtungen 30a, 30b des Kraftfahrzeugs 10 charakterisieren, der Steuereinheit 12 bereit. Die Auswerteeinheit 30c stellt ebenfalls der Steuereinheit 12 Daten bereit, und zwar Daten, die mittels der Sensoreinrichtungen 32, das heißt den Kameras 32, erfasst wurden und anhand der eine Gesamtsituation des Kraftfahrzeugs 10 erkannt werden kann (die Datenübertragung von den jeweiligen Kameras 32 zu der Auswerteeinheit 30c ist in Fig. 1 nicht skizziert).

Das Kraftfahrzeug 10 weist zudem eine Anzeigeeinrichtung 34 auf, auf der ein Einstellungsmenü für den Benutzer 16 des Kraftfahrzeugs 10 angezeigt werden kann.

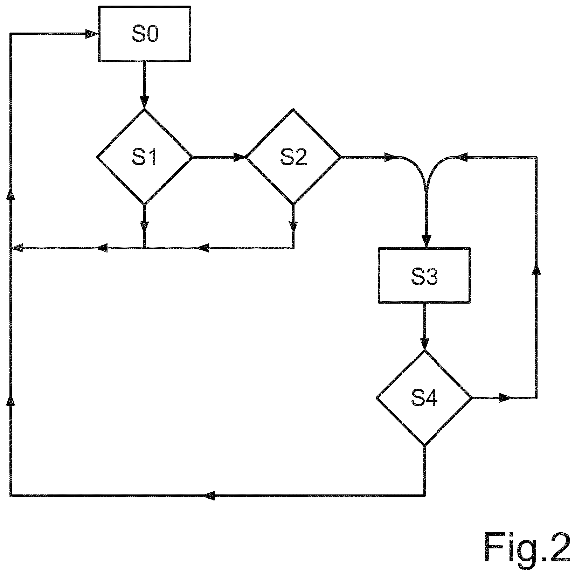

In Fig. 2 sind die einzelnen Schritte S0 bis S4 eines Verfahrens zum Betreiben eines Kraftfahrzeugs 10 skizziert. In einem Ausgangszustand des Kraftfahrzeugs 10 ist in der Steuereinheit 12 die Normallenkradlinie bereitgestellt, sodass gemäß den Vorgaben der Normallenkradkennlinie der Radeinschlagwinkel 20 mit dem Lenkraddrehwinkel 26 ins Verhältnis gesetzt ist. Dieser Ausgangszustand wird als Schritt S0 in der Fig. 2 skizziert. In einem ersten Verfahrensschritt S1 wird nun eine potentiell anstehende Situation des Kraftfahrzeugs 10 anhand von Daten, die ein Zustand der elektronischen Einrichtungen 30 des Kraftfahrzeugs 10 charakterisieren und von der Steuereinheit 12 empfangen werden, erkannt. Hierbei kann beispielsweise eine der folgenden Situationen erkannt werden: Ein Einparken des Kraftfahrzeugs 10, ein Anhängen eines Anhängers an das Kraftfahrzeug 10, ein Rangieren des Kraftfahrzeugs 10 mit angehängtem Anhänger, ein Fahren des Kraftfahrzeugs 10 auf einer vorgegebenen Fahrspur der Straße 18, ein Abbiegen des Kraftfahrzeugs 10.

Die potentiell anstehende Situation wird hierbei anhand der empfangenen Daten erkannt, wobei diese beinhalten können, ob ein Fahrerassistenzsystem 30a, das heißt in diesem Beispiel der Einparkhilfeassistent 30a des Kraftfahrzeugs 10, aktiviert ist. Die potentiell anstehende Situation des Kraftfahrzeugs 10 wird hierbei anhand eines Typs des aktivierten Fahrerassistenzsystems 30a erkannt. Der Einparkhilfeassistent 30a kann beispielsweise als Typ des Fahrerassistenzsystems 30a dem Typ "Einparken" zugeordnet sein. Indem der Einparkhilfeassistent 30a der Steuereinheit 12 meldet, dass dieses Fahrerassistenzsystem 30a aktiv ist, wird somit die Situation "Einparken" erkannt. Die empfangenen Daten können alternativ oder zusätzlich dazu auch mittels der Sensoreinrichtung 32 des Kraftfahrzeugs 10 erfasst werden, sodass anhand der derart bereitgestellten Daten die Situation des Kraftfahrzeugs 10 erkannt wird. Beispielsweise kann mithilfe der Sensoreinrichtung 32, die ihre von den Kameras 32 erfassten Daten an die Auswerteeinheit 30c des Kamerasystems übermittelt, erkannt werden, dass das Kraftfahrzeug 10 hinter einer als Parklücke identifizierten Stelle am Rand der Straße 18 angehalten hat. Die von der Sensoreinrichtung 32 erfassten Daten können alternativ dazu direkt an die Steuereinheit 12 übermittelt werden oder zunächst von der Sensoreinrichtung 32 selbst vorinterpretiert und anschließend die vorinterpretierten Daten direkt an die Steuereinheit 12 übermittelt werden. Werden zudem der Steuereinheit 12 anhand der Blinkereinrichtung 30b Daten bereitgestellt, die beinhalten, dass auf einer entsprechenden Seite des Kraftfahrzeugs 10 der Blinker des Kraftfahrzeugs 10 aktiviert wurde, kann die Steuereinheit 12 daraus schließen, dass die Situation "Einparken" potentiell ansteht. Die empfangenen Daten können zudem oder alternativ dazu eine Fahrtrichtung und/oder einen Gangwechsel des Kraftfahrzeugs 10 beinhalten.

In einem Schritt S2 wird nun überprüft, ob der erkannten Situation eine in der Steuereinheit 12 bereitgestellte Sonderlenkradkennlinie, die von der Normallenkradkennlinie abweicht, zugeordnet ist. Falls keine potentiell anstehende Situation erkannt wurde oder festgestellt wurde, dass zu einer erkannten Situation keine Sonderlenkradkennlinie in der Steuereinheit 12 hinterlegt ist, bleibt die Normallenkradkennlinie aktiviert und das Verfahren verbleibt im Schritt S0. Falls der erkannten Situation die bereitgestellte Sonderlenkradkennlinie zuordenbar ist, erfolgt im Schritt S3 ein Aktivieren der Sonderlenkradkennlinie. Die Ansteuerung der Kopplungseinheit 14 der Lenkung des Kraftfahrzeugs 10 erfolgt ab diesem Zeitpunkt nicht mehr gemäß der Normallenkradkennlinie sondern gemäß der Sonderlenkradkennlinie.

Gemäß der Sonderlenkradkennlinie kann vorgesehen sein, dass der Radeinschlagwinkel 20 der Räder 22 des Kraftfahrzeugs 10 von dem vom Lenkrad 24 eingenommene Lenkraddrehwinkel 26 entkoppelt ist, sodass beim Ansteuern der Lenkung durch die Steuereinheit 12 das Lenkrad 24 des Kraftfahrzeugs 10 unbewegt ist. Alternativ dazu kann als Sonderlenkradkennlinie vorgesehen sein, dass das Verhältnis zwischen Lenkraddrehwinkel 26 und Radeinschlagwinkel 20 reduziert wird, und zwar bevorzugt auf ein für den Benutzer 16 besonders komfortables und/oder ungefährliches Maß. Der Benutzer 16 kann hierfür mittels des Einstellungsmenüs, das ihm auf der Anzeigeeinrichtung 34 angezeigt werden kann, die Sonderlenkradkennlinie, die er für eine bestimmte potentiell anstehende Situation wünscht, auswählen und/oder einstellen.

Falls die empfangenen Daten beinhalten, dass das Fahrerassistenzsystem 30a aktiviert ist, jedoch bis zu einem Eingreifen des aktivierten Fahrerassistenzsystems 30a auf die Kopplungseinheit 14 der Lenkung ein vorgegebener Zeitversatz besteht, wird dies beim Überprüfen, ob der anhand des Typs des aktivierten Fahrerassistenzsystem 30a erkannten Situation eine in der Steuereinheit 12 bereitgestellte Sonderlenkradkennlinie zugeordnet ist, das heißt beim Schritt S2, berücksichtigt. Die Aktivierung der zugeordneten Sonderlenkradkennlinie erfolgt erst dann, wenn das aktivierte Fahrerassistenzsystem 30a auf die Kopplungseinheit 14 eingreift. Es ist somit auch möglich, dass mithilfe des Einparkhilfeassistenten 30a zunächst ein Parkplatz für das Kraftfahrzeug 10 gesucht wird. Während dieser Zeit kann der Benutzer 16 beispielsweise weiterhin manuell das Kraftfahrzeug 10 lenken. Sobald ein assistiert durchgeführtes Einparken auf diesem Parkplatz erfolgt, übernimmt jedoch der Einparkhilfeassistent 30a die Lenkung des Kraftfahrzeugs 10. Erst ab diesem Moment ist vorgesehen, dass eine für die Situation "Einparken" hinterlegte Sonderlenkradkennlinie aktiviert wird, das heißt der Verfahrensschritt S3 durchgeführt wird. Dies ist besonders sinnvoll bei Fahrerassistenzsystemen 30a, die als Notfallfunktion in die Lenkung des Kraftfahrzeugs 10 eingreifen, wie zum Beispiel einem Emergency Assist oder einem Spurhalteassistenten.

Sobald erkannt wird, dass die erkannte Situation beendet ist, beispielsweise dass der Einparkvorgang des Kraftfahrzeugs 10 erfolgt ist, wird die Normallenkradkennlinie im Schritt S4 wieder aktiviert. Falls bei einem Überprüfungsschritt, der überprüft, ob die erkannte Situation noch andauert oder nicht, jedoch festgestellt wird, dass diese erkannte Situation noch nicht beendet ist, bleibt weiterhin die Sonderlenkradkennlinie aktiviert, das heißt es erfolgt weiterhin der Schritt S3.

Insgesamt ist also festzuhalten, dass mit dem Verfahren zum Betreiben des Kraftfahrzeugs 10 bevorzugt zunächst ein Normalzustand des Kraftfahrzeugs 10 vorgesehen ist, bei dem die Steuereinheit 12 gemäß der Normallenkradkennlinie die Kopplungseinheit 14 des Kraftfahrzeugs 10 ansteuert. Daraufhin erfolgt ein Erkennen der potentiell anstehenden Situation des Kraftfahrzeugs 10, was beispielsweise anhand eines aktivierten Fahrerassistenzsystems 30a durch den Benutzer 16 oder anhand eines Eingriffs einer Notfallfunktion feststellbar ist. Zudem kann die Situation mithilfe der Sensoreinrichtung 32 des Kraftfahrzeugs 10 erfasst und erkannt werden. Daraus erfolgt eine Änderung der Lenkradbewegung, das heißt insbesondere ein Unterdrücken oder reduzieren eines Lenkraddrehwinkels 26 bei gleichbleibendem Radeinschlagwinkel 20 oder umgekehrt. Diese Veränderung der Lenkradbewegung erfolgt gemäß der Einstellungen des Benutzers 16. Abschließend wird nach dem Beenden der bekannten Situation die Lenkung wieder gemäß der Normallenkradkennlinie angesteuert. Letztendlich kann dadurch in für den Benutzer 16 nachvollziehbaren Situationen die Lenkradkennlinie geändert werden, zum Beispiel nach dem Aktivieren des Fahrerassistenzsystems 30a, wie beispielsweise dem Einparkhilfeassistenten 30a, einem optischen Parksystem oder einem anderen Parkassistenten, dem Eingriff einer Notfallfunktion mit starkem Lenkeingriff und/oder nach dem Erkennen eines Geschwindigkeitsschwellwerts der Drehbewegung des Lenkrads 24 und/oder einer Fahrtrichtung des Kraftfahrzeugs 10.

### Bezugszeichenliste

- 10: Kraftfahrzeug
- 12: Steuereinheit
- 14: Kopplungseinheit
- 16: Benutzer
- 18: Straße
- 20: Radeinschlagwinkel
- 22: Rad
- 24: Lenkrad
- 26: Lenkraddrehwinkel
- 30: elektronische Einrichtung
- 30a: Fahrerassistenzsystem
- 30b: Blinkereinrichtung
- 30c: Auswerteeinheit
- 32: Sensoreinrichtung
- 33: Seitenspiegel
- 34: Anzeigeeinrichtung

## Patentansprüche

1. Verfahren zum Betreiben einer Steuereinheit (12) eines Kraftfahrzeugs (10), wobei die Steuereinheit (12) zum elektrischen Ansteuern einer elektromechanischen Kopplungseinheit (14) einer Lenkung des Kraftfahrzeugs (10) eingerichtet ist und wobei die Steuereinheit (12) die Kopplungseinheit (14) gemäß einer Lenkradkennlinie ansteuert, die einen Radeinschlagwinkel (20) von Rädern (22) des Kraftfahrzeugs (10) mit einem von einem Lenkrad (24) des Kraftfahrzeugs (10) eingenommenen Lenkraddrehwinkel (26) gegenseitig ins Verhältnis setzt, wobei als eine Standardeinstellung der Lenkradkennlinie in der Steuereinheit (12) eine Normallenkradkennlinie bereitgestellt ist, **dadurch gekennzeichnet, dass** das Verfahren folgende Schritte umfasst:
- Erkennen einer potentiell anstehenden Situation des Kraftfahrzeugs (10) anhand von Daten, die einen Zustand eines Fahrerassistenzsystems (30a) des Kraftfahrzeugs (10) charakterisieren und von der Steuereinheit (12) empfangen werden, wobei die empfangenen Daten beinhalten, ob das Fahrerassistenzsystem (30a) des Kraftfahrzeugs (10) aktiviert ist, wobei die potentiell anstehende Situation des Kraftfahrzeugs (10) anhand eines Typs des aktivierten Fahrerassistenzsystems (30a) erkannt wird (S1);
- Überprüfen, ob der erkannten Situation eine in der Steuereinheit (12) bereitgestellte Sonderlenkradkennlinie, die von der Normallenkradkennlinie abweicht, zugeordnet ist (S2);
- Falls der erkannten Situation die bereitgestellte Sonderlenkradkennlinie zuordenbar ist, Aktivieren der Sonderlenkradkennlinie (S3).

2. Verfahren nach dem vorhergehenden Anspruch,
**dadurch gekennzeichnet, dass**
falls die empfangenen Daten beinhalten, dass das Fahrerassistenzsystem (30a) aktiviert ist, jedoch bis zu einem Eingreifen des aktivierten Fahrerassistenzsystems (30a) auf die Kopplungseinheit (14) der Lenkung ein vorgegebener Zeitversatz besteht, dies beim Überprüfen, ob der anhand des Typs des aktivierten Fahrerassistenzsystems (30a) erkannten Situation eine in der Steuereinheit (12) bereitgestellte Sonderlenkradkennlinie zugeordnet ist, berücksichtigt wird (S2) und die Aktivierung der zugeordneten Sonderlenkradkennlinie erst erfolgt, wenn das aktivierte Fahrerassistenzsystem (30a) auf die Kopplungseinheit (14) eingreift (S3).

3. Verfahren nach einem der vorhergehenden Ansprüche,
**dadurch gekennzeichnet, dass**
als potentiell anstehende Situation des Kraftfahrzeugs (10) eine Gesamtsituation des Kraftfahrzeugs (10) erkannt wird, die eine der folgenden Situationen umfasst:
- Einparken des Kraftfahrzeugs (10),
- Anhängen eines Anhängers an das Kraftfahrzeug (10),
- Rangieren des Kraftfahrzeugs (10) mit angehängtem Anhänger,
- Fahren des Kraftfahrzeugs (10) auf einer vorgegebenen Fahrspur,
- Abbiegen des Kraftfahrzeugs (10).

4. Verfahren nach einem der vorhergehenden Ansprüche,
**dadurch gekennzeichnet, dass**
die empfangenen Daten von einer Sensoreinrichtung (32) des Kraftfahrzeugs (10) bereitgestellt werden und anhand der derart bereitgestellten Daten die potentiell anstehende Situation des Kraftfahrzeugs (10) erkannt wird.

5. Verfahren nach einem der vorhergehenden Ansprüche,
**dadurch gekennzeichnet, dass**
die empfangenen Daten eine Fahrtrichtung des Kraftfahrzeugs (10) beinhalten.

6. Verfahren nach einem der vorhergehenden Ansprüche,
**dadurch gekennzeichnet, dass**
gemäß der Sonderlenkradkennlinie der Radeinschlagwinkel (20) der Räder (22) des Kraftfahrzeugs (10) von dem vom Lenkrad (24) eingenommenen Lenkraddrehwinkel (26) entkoppelt ist, sodass beim Ansteuern der Kopplungseinheit (14) durch die Steuereinheit (12) das Lenkrad (24) des Kraftfahrzeugs (10) unbewegt bleibt.

7. Verfahren nach einem der vorhergehenden Ansprüche,
**dadurch gekennzeichnet, dass**
die Sonderlenkradkennlinie von einem Benutzer (16) des Kraftfahrzeugs (10) mittels eines vorgegebenen Einstellungsmenüs auswählbar und/oder einstellbar ausgestaltet ist.

8. Verfahren nach einem der vorhergehenden Ansprüche,
**dadurch gekennzeichnet, dass**
sobald erkannt wird, dass die erkannte Situation beendet ist, die Normallenkradkennlinie aktiviert wird (S4).

9. Kraftfahrzeug (10) mit einer Steuereinheit (12), die zum elektrischen Ansteuern einer elektromechanischen Kopplungseinheit (14) einer Lenkung des Kraftfahrzeugs (10) ausgelegt ist und die eine Prozessoreinrichtung aufweist, die dazu eingerichtet ist, ein Verfahrens nach einem der vorhergehenden Ansprüche durchzuführen.

## Claims

1. Method for operating a control unit (12) of a motor vehicle (10), wherein the control unit (12) is configured to electrically actuate an electromechanical coupling unit (14) of a steering system of the motor vehicle (10), and wherein the control unit (12) actuates the coupling unit (14) according to a steering wheel characteristic curve which forms a mutual ratio between a wheel lock angle (20) of wheels (22) of the motor vehicle (10) and a steering wheel rotational angle (26) which is assumed by a steering wheel (24) of the motor vehicle (10), wherein a normal steering wheel characteristic curve is made available as a standard setting of the steering wheel characteristic curve in the control unit (12), **characterized in that** the method comprises the following steps:
- detecting a potentially upcoming situation of the motor vehicle (10) on the basis of data which characterize a state of a driver assistance system (30a) of the motor vehicle (10) and are received by the control unit (12), wherein the received data contain information as to whether the driver assistance system (30a) of the motor vehicle (10) is activated, wherein the potentially upcoming situation of the motor vehicle (10) is detected on the basis of a type of the activated driver assistance system (30a) (S1);
- checking whether the detected situation is assigned a special steering wheel characteristic curve which is made available in the control unit (12) and deviates from the normal steering wheel characteristic curve (S2) ;
- activating the special steering wheel characteristic curve if the special steering wheel characteristic curve which is made available can be assigned to the detected situation (S3).

2. Method according to the preceding claim, **characterized in that**
if the received data contain information to the effect that the driver assistance system (30a) is activated but there is a predefined time offset with respect to engagement of the activated driver assistance system (30a) in the coupling unit (14) of the steering system, this is taken into account in the checking as to whether a special steering wheel characteristic curve which is made available in the control unit (12) is assigned to the situation which is detected on the basis of the type of the activated driver assistance system (30a) (S2), and the assigned special steering wheel characteristic curve is not activated until the activated driver assistance system (30a) engages in the coupling unit (14) (S3).

3. Method according to one of the preceding claims, **characterized in that**
an overall situation of the motor vehicle (10) which comprises one of the following situations:
- parking of the motor vehicle (10),
- coupling of a trailer to the motor vehicle (10),
- maneuvering the motor vehicle (10) with a coupled trailer,
- driving the motor vehicle (10) on a predefined track, and
- the motor vehicle (10) making a turn,
is detected as a potentially upcoming situation of the motor vehicle (10).

4. Method according to one of the preceding claims, **characterized in that**
the received data are made available by a sensor device (32) of the motor vehicle (10), and the potentially upcoming situation of the motor vehicle (10) is detected on the basis of the data which are made available in this way.

5. Method according to one of the preceding claims, **characterized in that**
the received data contain a direction of travel of the motor vehicle (10).

6. Method according to one of the preceding claims, **characterized in that**
according to the special steering wheel characteristic curve the wheel lock angle (20) of the wheels (22) of the motor vehicle (10) is decoupled from the steering wheel rotational angle (26) which is assumed by the steering wheel (24), so that the steering wheel (24) of the motor vehicle (10) remains unmoved during the actuation of the coupling unit (14) by the control unit (12) .

7. Method according to one of the preceding claims, **characterized in that**
the special steering wheel characteristic curve is configured in such a way that it can be selected and/or set by a user (16) of the motor vehicle (10) by means of a predefined setting menu.

8. Method according to one of the preceding claims, **characterized in that**
the normal steering wheel characteristic curve is activated as soon as it is detected that the detected situation has ended (S4).

9. Motor vehicle (10) having a control unit (12) which is configured to electrically actuate an electromechanical coupling unit (14) of a steering system of the motor vehicle (10) and which has a processor device which is configured to carry out a method according to one of the preceding claims.

## Revendications

1. Procédé pour faire fonctionner une unité de commande (12) d'un véhicule automobile (10), l'unité de commande (12) étant conçue pour la commande électrique d'une unité de couplage (14) électromécanique d'une direction du véhicule automobile (10) et l'unité de commande (12) commandant l'unité de couplage (14) conformément à une courbe caractéristique de volant de direction, laquelle met en relation mutuelle un angle de braquage de roue (20) des roues (22) du véhicule automobile (10) avec un angle de rotation de volant de direction (26) adopté par le volant de direction (24) du véhicule automobile (10), une courbe caractéristique de volant de direction normale étant fournie dans l'unité de commande (12) en tant que réglage standard de la courbe caractéristique de volant de direction, **caractérisé en ce que** le procédé comprend les étapes suivantes :
- reconnaissance d'une situation imminente potentielle du véhicule automobile (10) à l'aide de données qui caractérisent un état d'un système d'assistance à la conduite (30a) du véhicule automobile (10) et qui sont reçues par l'unité de commande (12), les données reçues contenant une indication que le système d'assistance à la conduite (30a) du véhicule automobile (10) est activé, la situation imminente potentielle du véhicule automobile (10) étant reconnue à l'aide d'un type du système d'assistance à la conduite (30a) activé (S1) ;
- vérification si la situation reconnue est associée à une courbe caractéristique de volant de direction spéciale fournie dans l'unité de commande (12), laquelle s'écarte de la courbe caractéristique de volant de direction normale (S2) ;
- dans le cas où la situation reconnue peut être associée à la courbe caractéristique de volant de direction spéciale fournie, activation de la courbe caractéristique de volant de direction spéciale (S3).

2. Procédé selon la revendication précédente, **caractérisé en ce que** les données reçues contiennent une indication que le système d'assistance à la conduite (30a) est activé, un décalage temporel prédéfini existant toutefois jusqu'à une intervention du système d'assistance à la conduite (30a) sur l'unité de couplage (14) de la direction, lequel est pris en compte (S2) lors de la vérification si la situation reconnue à l'aide du type de système d'assistance à la conduite (30a) activé est associée à une courbe caractéristique de volant de direction spéciale fournie dans l'unité de commande (12) et l'activation de la courbe caractéristique de volant de direction spéciale associée n'a lieu que lorsque le système d'assistance à la conduite (30a) activé intervient (S3) sur l'unité de couplage (14).

3. Procédé selon l'une des revendications précédentes, **caractérisé en ce que** la situation imminente potentielle du véhicule automobile (10) reconnue est une situation globale du véhicule automobile (10) qui comprend l'une des situations suivantes :
- entrée en stationnement du véhicule automobile (10),
- attelage d'une remorque au véhicule automobile (10),
- manœuvre du véhicule automobile (10) avec la remorque attelée,
- conduite du véhicule automobile (10) sur une voie de circulation prédéfinie,
- virage du véhicule automobile (10).

4. Procédé selon l'une des revendications précédentes, **caractérisé en ce que** les données reçues sont fournies par un dispositif capteur (32) du véhicule automobile (10) et la situation imminente potentielle du véhicule automobile (10) est reconnue à l'aide des données ainsi fournies.

5. Procédé selon l'une des revendications précédentes, **caractérisé en ce que** les données reçues contiennent un sens de déplacement du véhicule automobile (10).

6. Procédé selon l'une des revendications précédentes, **caractérisé en ce que** l'angle de braquage de roue (20) des roues (22) du véhicule automobile (10) est découplé de l'angle de rotation de volant de direction (26) adopté par le volant de direction (24) conformément à la courbe caractéristique de volant de direction spéciale, de sorte que lors de la commande de l'unité de couplage (14) par l'unité de commande (12), le volant de direction (24) du véhicule automobile (10) reste immobile.

7. Procédé selon l'une des revendications précédentes, **caractérisé en ce que** la courbe caractéristique de volant de direction spéciale est configurée sélectionnable et/ou réglable par un utilisateur (16) du véhicule automobile (10) au moyen d'un menu de réglage prédéfini.

8. Procédé selon l'une des revendications précédentes, **caractérisé en ce que** dès qu'il est reconnu que la situation reconnue a pris fin, la courbe caractéristique de volant de direction normale est activée (S4).

9. Véhicule automobile (10) comprenant une unité de commande (12) qui est conçue pour la commande électrique d'une unité de couplage (14) électromécanique d'une direction du véhicule automobile (10) et qui possède un dispositif à processeur, lequel est conçu pour mettre en œuvre un procédé selon l'une des revendications précédentes.
